Europäisches Patentamt

European Patent Office

Office européen des brevets

(11) Publication number : **0 502 838 A1**

# (12) EUROPEAN PATENT APPLICATION

(21) Application number : **92850052.9**

(22) Date of filing : **06.03.92**

(51) Int. Cl.$^5$ : **C22F 1/12,** C23C 2/26, C25D 5/48, H01M 2/32, G01N 19/08

(30) Priority : **06.03.91 SE 9100661**

(43) Date of publication of application :
**09.09.92 Bulletin 92/37**

(84) Designated Contracting States :
**BE DE DK ES FR GB IT NL PT**

(71) Applicant : **VARTA BATTERI AKTIEBOLAG**
**P.O. Box 5317**
**S-102 42 Stockholm (SE)**

(72) Inventor : **Hakulinen, Martti**
**Lindvägen 8**
**S-577 32 Hultsfred (SE)**
Inventor : **Stenbäck, Sören**
**Remstigen 11**
**S-577 36 Hultsfred (SE)**

(74) Representative : **Sundström, Per Olof et al**
**Stenhagen Patentbyra AB P.O. Box 17709**
**S-118 93 Stockholm (SE)**

(54) **Process for healing defects in a protective layer.**

(57)    Defects in the form of cracks, enclosed cavities, voids, pores and the like in a solid protective covering, e.g. a lead covering, on battery cell components, such as copper conductors, are eliminated by encasing the component provided with the protective covering in an impervious, deformable layer, and then subjecting the composite body to an isostatic pressure treatment process at a pressure which exceeds the yield point of the protective covering, so as to render the protective covering impervious by pressing the walls defining the defects together.

EP 0 502 838 A1

Jouve, 18, rue Saint-Denis, 75001 PARIS

The present invention relates to a method for indicating and eliminating possible defects, such as cracks, pores, cavities, voids and the like in the protective covering of a battery component, said covering comprising a solid, outer moulded covering of ductile, relatively soft metal on a core of relatively hard material.

In the case of battery cells, and then particularly cells that are intended for special purposes, such as for use in submarines and corresponding vessels, a low internal resistance is desired in the cells, and to this end the cell poles and electrical conductors are made of copper. The operating conditions of the cells, however, is often such as to require the pole bolts of the cells and the so-called pole yokes which connect the cell plates to be provided with water cooling channels.

The battery electrolyte, sulphuric acid, however, attacks copper, and it is therefore normal practice to cover the copper components with a protective lead covering.

Those industrially accepted methods of applying solid lead covering or lead layers to copper components, however, cannot be carried out in a manner which will ensure that the lead covering will be permanently free from any defects and therewith result in leakage of electrolyte through the lead covering in the shorter or longer term.

The lead covering is at present normally applied by moulding lead around the copper components concerned, this method comprising the step of preheating the copper component and then introducing said component into a mould in which the component is encapsulated in lead.

It is essential that this lead covering is free from pores and cracks. If the acid is able to penetrate to the copper components, the cell becomes "poisoned" with copper and parts of the plate yokes and pole bolts are eaten away by rust, which is not acceptable from the safety aspect.

The lead-covered component is tested with respect to the presence of such defects as cracks, cavities, voids, pores and the like.

Hitherto, the most usual testing method applied to detect the presence of such defects involves the use of ultrasonic techniques. According to known techniques, any defects detected are remedied by flaming with gaseous hydrogen. Both testing and remedial action place high demands on the professional skills of the operators concerned, although the results are still not fully reliable despite the employment of skilled persons.

Accordingly, one object of the present invention is to provide a method for detecting and eliminating the possible presence of such defects as cracks, pores, cavities, voids and the like in a relatively soft metallic protective covering on a battery component comprising a core of relatively hard material.

This object is achieved by means of the method set forth in the following Claim 1. Further developments of the inventive method are set forth in the dependent claims.

The method thus comprises encasing a battery component provided with a solid, relatively soft moulded protective covering which is liable to contain defects in the form of cracks, pores, cavities, voids or the like in an impervious, deformable layer and then subjecting the encased body to isostatic pressure whose magnitude exceeds the yield point of the solid protective covering, so as to deform the protective covering material at the locations of said defects and therewith press the defects together.

The encasing layer may be a thin elastomeric layer or covering and can be removed upon completion of the isostatic pressure treatment. The isostatic pressure can be applied with the aid of known means, for example in accordance with the so-called wet-bag technique, in which the encased component is placed in a container in which a liquid is pressurized.

The encasing layer functions to prevent the pressure-exerting medium from penetrating into the defects and thereby preventing the collapse or compression of said defects.

In other respects, the encasing layer shall present the least possible resistance to isostatic pressure treatment. The encasing layer preferably comprises an elastomer which will behave essentially as a liquid under the pressure conditions concerned. As will be understood, the encasing layer must be plastically workable and ductile under the effect of the isostatic pressure, so that the defects are pressed together when the yield point of the solid protective covering is exceeded.

The isostatic pressure applied will preferably considerably exceed the yield point of the protective covering.

Although the invention is generally applicable within the scope of Claim 1, the invention is primarily intended for rendering a lead covering on copper components intended to battery cells completely impervious, and we have found that an isostatic pressure of about 2000 bars is suitable for rendering lead coverings impermeable. Although still higher pressures can be used without problem, for instance pressures up to 4000 bars, such high pressure levels apparently result in higher costs without affording a corresponding improvement in the sealing effect obtained.

The isostatic pressure shall be applied at such a level as to exceed at least the yield point of the protective covering, and also such as to enable the material defining such defects in the form of cracks and pores to move and squeeze together the walls of said cracks and pores and to collapse cavities and voids enclosed in the object.

Upon completion of the isostatic pressure treatment process, hollows or shallows may form on the surface of the protective covering, indicating where large defects have been collapsed. These hollows can be readily repaired with filler material, using known techniques.

The inventive method is effected over the whole of the surface of the component being tested, and consequently there is no necessity for the defects to be detected prior to rendering the protective covering impervious.

The inventive method can also be carried out much more quickly than the described known method, and appears to provide more positive results.

Example

Copper pole yokes intended for submarine battery cells and provided with a protective lead moulding exhibited defects in the form of cracks, pores and cavities enclosed in the lead covering or moulding. One such pole yoke was encased in a thin layer of soft PVC and lowered into a liquid-like pressure medium in a pressure cylinder forming part of an isostatic press. The thus encased pole yoke was then subjected to a pressure of 2000 bars, whereafter the pressure was removed and the encased component removed from the press. The casing was removed and the protective covering of the pole yoke examined. Upon examination, it was found that the walls of the defects had been squeezed together, so as to leave a fully impervious protective covering. The latex encasing layer was applied by dipping the pole yoke into a latex bath, and was applied to a thickness of about 2 mm. The lead covering had a thickness of about 5 mm.

**Claims**

1. A method for indicating and eliminating possible defects, such as cracks, pores, cavities, voids and the like in the protective covering of a battery component, said covering comprising a solid, outer moulded covering of ductile, relatively soft metal on a core of relatively hard material , **characterized** by encasing the protective covering in an impervious casing and subjecting the thus encased body comprised of said core and said protective covering to an isostatic pressure which exceeds the yield point of the protective covering, so as to deform said protective covering at the locations of said defects, the walls defining said defects thereby being pressed together such as to eliminate the defects.

2. A method according to Claim 1, **characterized** in that the encasing layer is a thin elastic layer; and in that the isostatic pressure is applied to the encased body by means of a pressurized medium in a pressure chamber in an isostatic press.

3. A method according to Claim 1 or 2, **characterized** in that the protective covering is comprised of lead.

4. A method according to Claim 3, **characterized** in that the isostatic pressure is set to about 2000 bars.

5. A method according to Claim 3 or 4, **characterized** in that the core is comprised of copper.

6. A method according to any one of Claims 1-5, **characterized** by filling in those hollows or shallows which form on the surface of the protective covering at the location of a collapsed defect as a result of placing the battery component under pressure.

European Patent Office

**EUROPEAN SEARCH REPORT**

Application Number

EP 92850052.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE - A - 3 734 876 <br> (SIEBERT) <br> * Totality * <br> -- | 1-3,5, 6 | C 22 F 1/12 <br> C 23 C 2/26 <br> C 25 D 5/48 <br> H 01 M 2/32 <br> G 01 N 19/08 |
| Y | DE - B - 2 237 656 <br> (VARTA) <br> * Totality * <br> -- | 1-3,5, 6 | |
| A | DE - A - 2 242 554 <br> (DECHANT) <br> * Page 2 * <br> -- | 1 | |
| A | GB - A - 2 038 676 <br> (GENERAL ELECTRIC) <br> * Abstract * <br> -- | 1 | |
| A | US - A - 4 152 223 <br> (WALLACE) <br> * Abstract * <br> -- | 1 | |
| A | WO - A - 85/03 090 <br> (KLÖCKNER-HUMBOLDT-DEUTZ) <br> * Claim 1 * <br> ---- | 1 | **TECHNICAL FIELDS SEARCHED (Int. Cl.5)** <br><br> C 22 F <br> C 23 C <br> C 25 D <br> H 01 M <br> G 01 N <br> B 28 B <br> G 01 M |

The present search report has been drawn up for all claims

| Place of search | Date of completion of the search | Examiner |
|---|---|---|
| VIENNA | 21-05-1992 | NARDAI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)